# EUROPEAN PATENT APPLICATION

(11) **EP 3 357 750 A1**
(43) Date of publication of application: **08.08.2018**
(21) Application number: 17154489.3
(22) Date of filing: 02.02.2017
(51) Int. Cl.: B60P 1/42, B60P 1/54, B60P 3/14

(54) **TRAILER AND METHOD FOR LOADING A TRAIN CAR**

(71) Applicant: CHS Inc, Inver Grove Heights, MN 55077 (US)
(72) Inventor: VLADESCU, Marius, 1213 Petit Lancy (CH); DAMOC, Alexandru, 1213 Petit Lancy (CH); ORIOLI, Marco, 1213 Petit Lancy (CH)
(74) Representative: Hanna Moore + Curley

(57) **Abstract**

Train car (424) loading systems are described herein. A mobile train car loading trailer (110, 210, 310, 410) can include a crane (114, 214, 314) to remove a hopper (102, 202, 302, 402) from the trailer (110, 210, 310, 410) for a train car load cycle, where the hopper (102, 202, 302, 402) is to receive agricultural product and includes a first screw conveyor (104, 204, 304, 404), a flow scale (106, 206, 306, 406) including a second screw conveyor (108, 208, 308 408), where the flow scale (106, 206, 306, 406) is to weigh the agricultural product during the train car load cycle, and a laboratory (112, 212, 312) to test the agricultural product in the flow scale (106, 206, 306, 406) during the train car load cycle, where the agricultural product is transferred to a train car (424) via the second screw conveyor (108, 208, 308 408) until a threshold agricultural product weight is reached.

## Description

### Technical Field

The present disclosure relates to train car loading systems for loading train cars.

### Background

Agricultural products, such as wheat, barley, sunflower seeds, grain, corn, beans, peas, rice, and/or other types of products are harvested by farmers and may be stored and/or sold. Storing and/or selling agricultural products can include transportation of the agricultural products. For example, a farmer may need to transport agricultural product to a buyer. A buyer may need to transport the agricultural product to other buyers, for example to be used to produce goods.

Efficient transportation of agricultural products can be accomplished using rail transportation. Rail transportation refers to the conveyance of goods on wheeled vehicles (e.g., a train) running on rails (e.g., tracks). For example, vehicles, such as a locomotive, can provide motive power to other railcars, where the locomotive and the other railcars collectively make up a train.

A train can include freight cars that can be used for transportation of agricultural product. For example, a farmer can sell agricultural product to a buyer, who may load the agricultural product into freight cars that make up a train in order to transport the agricultural product elsewhere.

### Brief Description of the Drawings

Figure 1 illustrates a perspective view of a mobile configuration of a mobile train car loading trailer, in accordance with one or more embodiments of the present disclosure.
Figure 2 illustrates a perspective view of a mobile train car loading trailer, in accordance with one or more embodiments of the present disclosure.
Figure 3 illustrates a different perspective view of a mobile train car loading trailer in a train car load cycle configuration, in accordance with one or more embodiments of the present disclosure.
Figure 4 illustrates a side view of a mobile train car loading trailer in a train car load cycle configuration and a train car, in accordance with one or more embodiments of the present disclosure.
Figure 5 is a flow chart of a method for train car loading, in accordance with one or more embodiments of the present disclosure.

### Detailed Description

Train car loading systems are described herein. For example, a mobile train car loading system can include a hopper including a first screw conveyor, where the hopper is to receive agricultural product, a flow scale on a trailer, the flow scale including a second screw conveyor where the flow scale is to receive the agricultural product from the hopper and weigh the agricultural product, and a laboratory on the trailer, where the laboratory is to test the agricultural product in the flow scale, where the agricultural product is transferred to a train car after being weighed by the flow scale.

As discussed above, rail transportation can be used to transport agricultural product. For example, a farmer can sell agricultural product to a buyer, where it can be then loaded onto a train for transportation. However, in many instances a farmer may be located in a rural area that may lack facilities to transfer agricultural product onto a train for transportation. Additionally, rural areas may lack necessary equipment to test agricultural product to ensure quality.

Further, different states may have different rules, laws, and/or regulations regarding rail transportation of goods. For instance, different states may have different weight limits for trains, including weights of freight cars carrying goods such as agricultural products.

Rural areas may lack the ability to properly weigh the amount of agricultural product for each freight car. An overweight train could result in fines for buyers and/or operators of trains, resulting in lost profits. Further, an overweight train may be dangerous to operate.

Train car loading, in accordance with the present disclosure, can allow for efficient loading of train cars, for instance, in rural areas which may lack sufficient infrastructure for loading train cars. Additionally, train car loading in accordance with the present disclosure can ensure that the proper amount of agricultural product is loaded into a train car without exceeding specified weight limits, as well as providing for testing of the agricultural product to ensure quality product for transportation.

In the following detailed description, reference is made to the accompanying drawings that form a part hereof. The drawings show by way of illustration how one or more embodiments of the disclosure may be practiced.

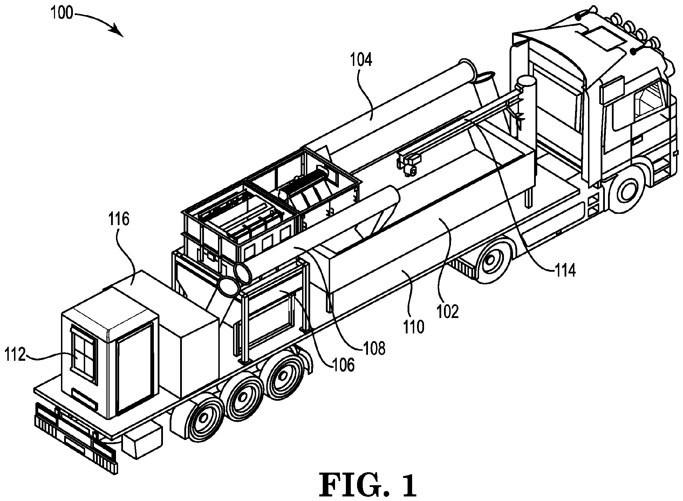

Directional terms such as "horizontal" and "vertical" are used with reference to the component orientations depicted in Figures 1-4. These terms are used for example purposes only and are not intended to limit the scope of the appended claims.

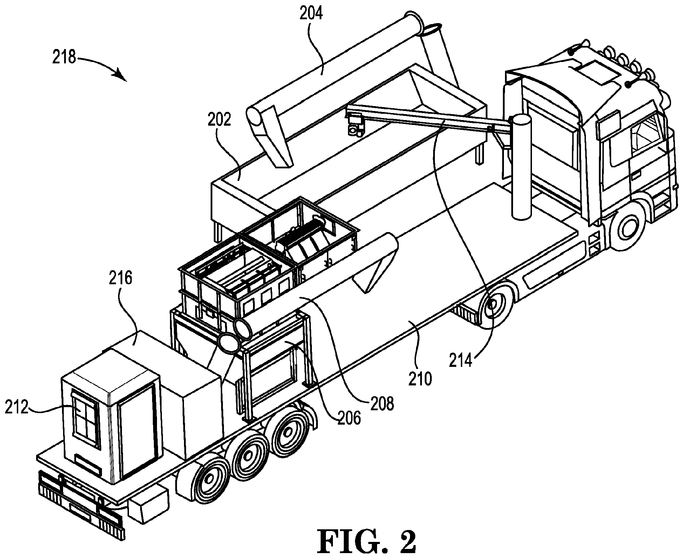

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be reference as 202 in Figure 2.

As used herein, "a" or "a number of" something can refer to one or more such things. For example, "a number of train cars" can refer to one or more train cars.

Figure 1 illustrates a perspective view 100 of a mobile configuration of a mobile train car loading trailer, in accordance with one or more embodiments of the present disclosure. Figure 1 includes a hopper 102, a screw conveyor 104, a flow scale 106, a screw conveyor 108, a trailer 110, a laboratory 112, a crane 114, and a generator 116.

As shown in Figure 1, mobile train car loading trailer 110 can include hopper 102, flow scale 106, laboratory 112, crane 114, and generator 116. As used herein, a hopper refers to a container that can receive a bulk material. The bulk material can include an agricultural product, such as wheat, barley, sunflower seeds, grain, corn, beans, peas, and/or rice, although embodiments of the present disclosure are not limited to the above listed agricultural products and therefore any suitable bulk material can be transported with such a trailer.

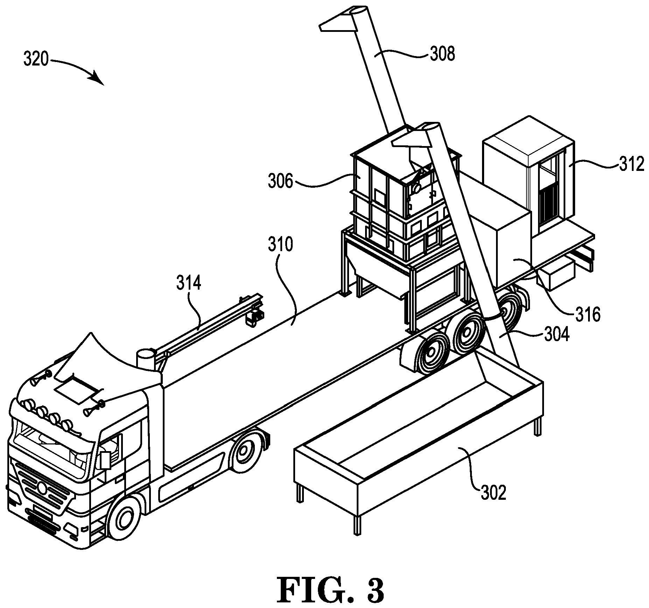

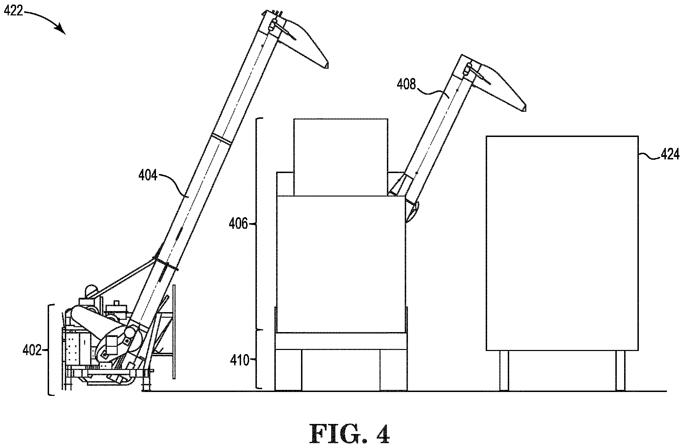

Hopper 102 can include a screw conveyor 104. As used herein, a screw conveyor refers to a mechanism that uses a rotating helical screw blade within a tube or other enclosure to move granular materials, such as agricultural products. For example, hopper 102 can have screw conveyor 104 utilized to move granular materials such that screw conveyor 104 can transfer agricultural product from hopper 102 to flow scale 106 via the helical screw blade, as will be further described herein with respect to Figures 3 and 4.

Trailer 110 can include flow scale 106. As used herein, a flow scale refers to a weighing device to weigh bulk material. For example, flow scale 106 can continuously weigh agricultural product as the agricultural product flows through flow scale 106. In such an embodiment, a cumulative agricultural product weight of the agricultural product that has flowed through flow scale 106 can be generated (e.g., via flow scale 106 or components connected thereto).

Flow scale 106 can include a screw conveyor 108. For example, flow scale 106 can be attached to screw conveyor 108 such that screw conveyor 108 can transfer agricultural product from flow scale 106 to a train car via the helical screw blade, as will be further described herein with respect to Figures 3 and 4.

As shown in Figure 1, screw conveyor 104 and screw conveyor 108 can be collapsible. For instance, screw conveyors 104 and 108 can be folded, as shown in Figure 1, into a small space. Collapsing screw conveyors 104 and 108 can allow for transportation of trailer 110 when the mobile configuration of mobile train car loading trailer 110 is not performing a train car load cycle, as will be further described herein with respect to Figures 3-5.

As shown in Figure 1, flow scale 106 can be collapsible. For instance, flow scale 106 can be folded, as shown in Figure 1, into a small space. Collapsing flow scale 106 can allow for transportation of trailer 110 when the mobile configuration of mobile train car loading trailer 110 is not performing a train car load cycle, as will be further described herein with respect to Figures 3-5.

Mobile train car loading trailer 110 is in a mobile configuration as shown in Figure 1. For example, mobile train car loading trailer may need to travel to a location to perform a train car load cycle. The mobile configuration of mobile train car loading trailer 110 can allow mobile train car loading trailer 110 to travel on public roadways in order to reach train car load cycle locations. For instance, the mobile configuration of mobile train car loading trailer 110 can avoid the need to acquire special permits or licenses to utilize public roadways when traveling to and/or from train car load cycle locations.

As shown in Figure 1, trailer 110 is connected to a tractor unit (e.g., a truck, tractor, lorry, etc.) As used herein, a tractor unit refers to a towing engine providing motive power for hauling (e.g., towing) a trailer (e.g., trailer 110). The tractor unit can provide power to move trailer 110 to different locations to perform train car loading cycles.

In some embodiments, although not shown in Figure 1 for clarity and so as not to obscure embodiments of the present disclosure, the mobile configuration of the mobile train car loading trailer 110 may include a cover, such as a tarp or canvas. The cover can function to hide and/or cover the hopper 102, screw conveyor 104, flow scale 106, screw conveyor 108, laboratory 112, crane 114, and generator 116 from pedestrians and/or weather conditions, such as rain and/or snow, etc.

Trailer 110 can include a crane 114. As used herein, a crane refers to a type of machine that can be used to both, lift and/or lower, objects and/or materials vertically, and/or move them horizontally. For instance, crane 114 can lift and/or lower hopper 102 in preparation for a train car load cycle, as will be further described herein with respect to Figures 3-5.

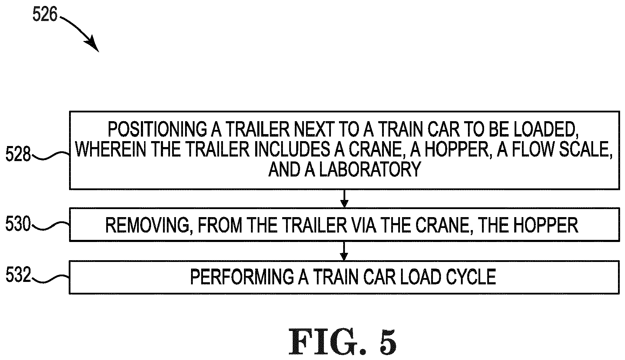

Trailer 110 can include a laboratory 112. As used herein, a laboratory refers to a facility that can provide controlled conditions in which scientific and/or technological research, experiments, and/or measurements may be performed. For example, laboratory 112 can test agricultural product for moisture content, presence of foreign matter, oil content, and/or test weight, as will be further described herein with respect to Figures 3 and 5.

Trailer 110 can include a generator 116. As used herein, a generator refers to a device that converts mechanical energy to electrical energy for use in an external circuit. Generator 116 can be a gasoline generator, although embodiments of the present disclosure are not limited to gasoline generators. Generator 116 can provide power to screw conveyors 104 and 108, flow scale 106, crane 114, and/or laboratory 112.

Figure 2 illustrates a perspective view 218 of a mobile train car loading trailer, in accordance with one or more embodiments of the present disclosure. Figure 2 includes a hopper 202, a screw conveyor 204, a flow scale 206, a screw conveyor 208, a trailer 210, a laboratory 212, a crane 214, and a generator 216.

As shown in Figure 2, hopper 202 has been removed from trailer 210. Hopper 202 can be removed from trailer 210 via crane 214. For example, crane 214 can lift hopper 202 from trailer 210, move hopper 202 horizontally away from trailer 210, and set hopper 202 onto the ground or a platform next to trailer 210.

Crane 214 can remove hopper 202 from trailer 210 in preparation for a train car load cycle. For example, in preparing to load a train car with agricultural product, crane 214 can remove hopper 202 from trailer 210, as will be further described herein with respect to Figures 3-5.

Crane 214 can add hopper 202 back to trailer 210 after a train car load cycle is complete, as will be further described herein with respect to Figure 3. For example, once a train car is filled with agricultural product, crane 214 can lift hopper 202 from the ground or from a platform next to trailer 210, move hopper 202 horizontally towards trailer 210, and set hopper 202 onto trailer 210.

Figure 3 illustrates a different perspective view 320 of a mobile train car loading trailer in a train car load cycle configuration, in accordance with one or more embodiments of the present disclosure. Figure 3 includes a hopper 302, a screw conveyor 304, a flow scale 306, a screw conveyor 308, a trailer 310, a laboratory 312, a crane 314, and a generator 316.

As shown in Figure 3, the mobile train car loading trailer is in a train car load cycle configuration. For example, the mobile train car loading trailer can perform a train car load cycle, including receiving agricultural product at hopper 302, weighing the agricultural product via flow scale 306, and transferring the agricultural product to the train car, as will be further described herein.

As previously described in connection with Figures 1 and 2, trailer 310 includes a crane 314. Crane 314 can remove hopper 302 from trailer 310 so that hopper 302 can receive agricultural product to be loaded into a train car during the train car load cycle.

Flow scale 306 can receive the agricultural product from hopper 302. For example, flow scale 306 can receive the agricultural product from hopper 302 via screw conveyor 304.

Flow scale 306 can weigh the agricultural product from hopper 302 as it moves through flow scale 306. For example, as agricultural product is received by flow scale 306, it can be continuously weighed and transferred to the train car via screw conveyor 308. During the continuous transfer of agricultural product, flow scale 306 continuously weighs the agricultural product, tabulating a cumulative weight of the agricultural product during the continuous transfer.

The agricultural product can be transferred to a train car via screw conveyor 308 until a threshold agricultural product weight is reached. Flow scale 306 can prevent further transfer of agricultural product to the train car in response to a threshold agricultural product weight being reached. For example, a given state may specify a gross weight limit for a train car to be 80 tons. Based on the weight of a train car being 60 tons, the threshold agricultural product weight may be 20 tons (e.g., 20 tons of agricultural product may be transferred to the train car). Therefore, agricultural product can be transferred to the train car until flow scale 306 weighs 20 tons of agricultural product.

Once the threshold agricultural product weight is reached, screw conveyor 308 can stop transferring agricultural product from flow scale 306 to the train car. Additionally, screw conveyor 304 can stop transferring agricultural product from hopper 302 to flow scale 306. That is, screw conveyors 304 and 308 can be synced such that in response to the threshold agricultural product weight being reached, they both stop transfer of agricultural product from hopper 302 to flow scale 306, and flow scale 306 to the train car, respectively.

The threshold product weight may be configurable. For instance, as previously described above, different states may have different rules, laws, and/or regulations regarding weight limits of train cars. For example, a first state may specify a max gross weight of a train car to be 80 tons, whereas a second state may specify a max gross weight of a train car to be 100 tons. In this example, if the train car weight is 60 tons, the mobile train car loading trailer can specify the threshold product weight to be 20 tons when performing a train car load cycle in the first state, and can configure the threshold product weight to be 40 tons when performing a train car load cycle in the second state.

Although the train car load cycle is described as loading one train car with agricultural product, embodiments of the present disclosure are not so limited. For example, a train car load cycle can be performed to fill a number of train cars of a train, as will be further described herein with respect to Figure 5.

As previously described in connection with Figure 1, trailer 310 may include a laboratory 312. Laboratory 312 can test the agricultural product in flow scale 306 during the train car load cycle. For instance, laboratory 312 can test the agricultural product for moisture content, presence of foreign matter, oil content, and/or test weight, although laboratory 312 is not limited to the listed test items.

Laboratory 312 can issue a weight ticket for the train car after the train car load cycle is complete. For example, rules, laws, and/or regulations of a certain state may specify a train car loaded with agricultural product have a verified (e.g., certified) weight. Laboratory 312 may issue a weight ticket certifying the weight of the agricultural product included in each train car so that the train is in compliance with rules, laws, and/or regulations surrounding rail transportation in that state.

Although laboratory 312 is described as issuing a weight ticket for each train car having agricultural product, embodiments of the present disclosure are not so limited. For example, laboratory 312 may issue a ticket certifying the moisture content, whether there is foreign matter present, and/or the oil content of the agricultural product, although embodiments of the present disclosure are not limited to the above listed issued certifications.

Generator 316 can provide power to screw conveyors 304 and 308, flow scale 306, crane 314, and/or laboratory 312 such that the mobile train car loading trailer is able to perform a train car load cycle. Further, generator 316 can provide power such that laboratory 312 is able to carry out testing of the agricultural product.

Once a train car load cycle is complete, crane 314 can add hopper 302 back to trailer 310. For example, crane 314 can lift hopper 302 back on to trailer 310 such that the mobile train car loading trailer is in a mobile configuration.

Figure 4 illustrates a side view 422 of a mobile train car loading trailer in a train car load cycle configuration and a train car, in accordance with one or more embodiments of the present disclosure. Figure 4 includes a hopper 402, a screw conveyor 404, a flow scale 406, a screw conveyor 408, a trailer 410, and a train car 424.

As shown in Figure 4, hopper 402 is next to flow scale 406. Additionally, trailer 410, including flow scale 406, is located next to train car 424.

As previously described in connection with Figures 1-3, hopper 402 can transfer agricultural product from hopper 402 to flow scale 406 via screw conveyor 404. Flow scale 406 can transfer agricultural product from flow scale 406 to train car 424 via screw conveyor 408. That is, screw conveyor 404 transfers agricultural product from hopper 402 to flow scale 406, and screw conveyor 408 transfers agricultural product from flow scale 406 to train car 424.

Figure 5 is a flow chart of a method 526 for train car loading, in accordance with one or more embodiments of the present disclosure. Method 526 may be performed, for example, by a mobile train car loading trailer, as previously described in connection with Figures 1-4.

At 528, the method 526 includes positioning the mobile train car loading trailer next to a train car to be loaded, where the trailer includes a crane, a hopper, a flow scale, and a laboratory. For example, when the mobile train car loading trailer is in a mobile configuration, it can be moved to a location at which a train car load cycle is to be performed. For instance, the location may be in a rural area in which a farmer is transporting agricultural product to be sold and loaded onto a train for transportation.

At 530, the method 526 includes removing, from the trailer via the crane, the hopper. For example, once the mobile train car loading trailer is at the correct location, the crane may remove the hopper from the trailer in preparation for performing the train car load cycle.

At 532, the method 526 includes performing a train car load cycle. The train car load cycle can include receiving agricultural product, weighing the agricultural product, and transferring the agricultural product to the train car.

Agricultural product can be received via the hopper. For example, a farmer may unload agricultural product from a truck into the hopper to be weighed and transferred into a train car. The agricultural product can be transferred from the hopper to a flow scale to be weighed. The agricultural product can be transferred via a first screw conveyor.

A flow scale can weigh the agricultural product as it moves through the flow scale. For example, agricultural product can continuously move through the flow scale, be weighed, and transferred to the train car via a second screw conveyor connected to the flow scale.

The second screw conveyor can transfer agricultural product from the flow scale to the train car until a threshold agricultural product weight is reached. For example, as the agricultural product continuously moves through the flow scale, the flow scale can monitor the cumulative weight of the agricultural product. Once the cumulative weight of the agricultural product reaches a threshold weight, transfer of the agricultural product to the train car can be stopped.

The second screw conveyor can stop transfer of the agricultural product from the flow scale to the train car in response to the threshold agricultural product weight being reached. Additionally, the first screw conveyor can stop transfer of the agricultural product from the hopper to the flow scale in response to the threshold agricultural product weight being reached. That is, both the first and the second screw conveyors can be synced such that they both cease transfer of agricultural product when the threshold agricultural product weight is reached. Keeping the first and second screw conveyors synced such that they stop transfer of agricultural product at the same time can help to avoid overflow of agricultural product from the train car and/or from the flow scale.

In some embodiments, once a train car is loaded, the train may move forward or backwards so that a different train car can be loaded. The different train car can be loaded with agricultural product until the threshold agricultural product weight is again reached. This process may be repeated until all of the train cars to be filled have been filled with agricultural product.

In some embodiments, once a train car is loaded, the mobile train car loading trailer may be put into the mobile configuration, moved forward or backwards, and perform another train car load cycle so that a different train car can be loaded. The different train car can be loaded with agricultural product until the threshold agricultural product weight is again reached. This process may be repeated until all of the train cars to be filled have been filled with agricultural product.

Once the train car load cycle is finished, the crane can move the hopper back on to the trailer. The mobile train car loading trailer can then be put back in a mobile configuration for transportation to a different train car loading cycle location.

Mobile train car loading, as described above, can provide a way to efficiently loading train cars with agricultural product. Additionally, train cars may be loaded with agricultural product in areas which might otherwise lack the infrastructure for doing so, such as in rural areas. Further, the mobile train car loading trailer can ensure the correct and lawful amount of agricultural product is loaded into each train car, ensuring compliance with weight rules, laws and/or regulations regarding rail transportation of goods, as well as providing for a train that is not overloaded so as to ensure safe operation of the train and safe transportation of the agricultural product.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

These embodiments are described in sufficient detail to enable those of ordinary skill in the art to practice one or more embodiments of this disclosure. It is to be understood that other embodiments may be utilized and that process and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A trailer (110, 210, 310, 410) for loading a train car (424), comprising:
a crane (114, 214, 314) configured to remove a hopper (102, 202, 302, 402) from the trailer (110, 210, 310, 410) for a train car load cycle, wherein the hopper (102, 202, 302, 402) is configured to receive agricultural product, and wherein the hopper (102, 202, 302, 402) includes a first screw conveyor (104, 204,304,404);
a flow scale (106, 206, 306, 406) including a second screw conveyor (108, 208, 308 408), wherein the flow scale (106, 206, 306, 406) is configured to weigh the agricultural product during the train car load cycle; and
a laboratory (112, 212, 312) configured to test the agricultural product in the flow scale (106, 206, 306, 406) during the train car load cycle;
wherein the agricultural product is transferred to a train car (424) via the second screw conveyor (108, 208, 308 408) until a threshold agricultural product weight is reached.

2. The trailer (110, 210, 310, 410) of claim 1, wherein the crane (114, 214, 314) is configured to add the hopper (102, 202, 302, 402) to the trailer (110, 210, 310, 410) after the train car load cycle is complete.

3. The trailer (110, 210, 310, 410) of claim 1 or claim 2, wherein the flow scale (106, 206, 306, 406) is configured to receive the agricultural product from the hopper (102, 202, 302, 402) via the first screw conveyor (104, 204, 304, 404).

4. The trailer (110, 210, 310, 410) of any preceding claim, wherein the flow scale (106, 206, 306, 406) is configured to prevent further agricultural product from being transferred to the train car (424) in response to the threshold agricultural product weight being reached.

5. The trailer (110, 210, 310, 410) of any preceding claim, wherein the laboratory (112, 212, 312) is configured to test the agricultural product for at least one of moisture content, foreign matter, oil content, and test weight.

6. The trailer (110, 210, 310, 410) of any preceding claim, wherein the laboratory (112, 212, 312) is configured to issue a weight ticket for the train car (424) after the train car load cycle is complete.

7. The trailer (110, 210, 310, 410) of any preceding claim, wherein the trailer (110, 210, 310, 410) further includes a generator (116, 216, 316) configured to power at least one of the first screw conveyor (104, 204, 304, 404), the second screw conveyor (108, 208, 308 408), the flow scale (106, 206, 306, 406), and the laboratory (112, 212, 312).

8. The trailer (110, 210, 310, 410) of any preceding claim, wherein the first screw conveyor (104, 204, 304, 404) and the second screw conveyor (108, 208, 308 408) are collapsible.

9. The trailer (110, 210, 310, 410) of any preceding claim, wherein the threshold product weight is configurable.

10. A method for loading a train car (424), comprising:
positioning a trailer (110, 210, 310, 410) next to a train car (424) to be loaded, wherein the trailer (110, 210, 310, 410) includes a crane (114, 214, 314), a hopper (102, 202, 302, 402), a flow scale (106, 206, 306, 406), and a laboratory (112, 212, 312);
removing, from the trailer (110, 210, 310, 410) via the crane (114, 214, 314), the hopper (102, 202, 302, 402);
performing a train car load cycle, including:
receiving, via the hopper (102, 202, 302, 402), agricultural product to be loaded into a train car (424);
transferring the agricultural product from the hopper (102, 202, 302, 402) to the flow scale (106, 206, 306, 406);
weighing, via the flow scale (106, 206, 306, 406), the agricultural product; and
transferring the agricultural product from the flow scale (106, 206, 306, 406) to the train car (424) until a threshold agricultural product weight is reached.

11. The method of claim 10, wherein the method further includes preventing further transfer of agricultural product from the hopper (102, 202, 302, 402) to the flow scale (106, 206, 306, 406) in response to the threshold agricultural product weight being reached.

12. The method of claim 10 or claim 11, wherein the method further includes testing, via the laboratory (112, 212, 312), the agricultural product.

13. The method of any one of claims 10 to 12, wherein the method includes transferring the agricultural product from the hopper (102, 202, 302, 402) to the flow scale (106, 206, 306, 406) via a first screw conveyor (104, 204, 304, 404) attached to the hopper (102, 202, 302, 402).

14. The method of any one of claims 10 to 13, wherein the method includes transferring the agricultural product from the flow scale (106, 206, 306, 406) to the train car (424) via a second screw conveyor (108, 208, 308 408) attached to the flow scale (106, 206, 306, 406).

15. The method of any one of claims 10 to 14, wherein the method includes moving the hopper (102, 202, 302, 402) to the trailer (110, 210, 310, 410) via the crane (114, 214, 314) in response to the train car load cycle being finished.

## Amended claims

### Amended claims in accordance with Rule 137(2) EPC.

1. A trailer (110, 210, 310, 410) for loading a train car (424), comprising:
a hopper (102, 202, 302, 402) including a first screw conveyor (104, 204, 304, 404), wherein the hopper (102, 202, 302, 402) is configured to receive agricultural product;
a crane (114, 214, 314) configured to remove the hopper (102, 202, 302, 402) from the trailer (110, 210, 310, 410) for a train car load cycle;
a flow scale (106, 206, 306, 406) including a second screw conveyor (108, 208, 308 408), wherein the flow scale (106, 206, 306, 406) is configured to weigh the agricultural product during the train car load cycle; and
a laboratory (112, 212, 312) configured to test the agricultural product in the flow scale (106, 206, 306, 406) during the train car load cycle;
wherein the agricultural product is transferred to a train car (424) via the second screw conveyor (108, 208, 308 408) until a threshold agricultural product weight is reached.

2. The trailer (110, 210, 310, 410) of claim 1, wherein the crane (114, 214, 314) is configured to add the hopper (102, 202, 302, 402) to the trailer (110, 210, 310, 410) after the train car load cycle is complete.

3. The trailer (110, 210, 310, 410) of claim 1, wherein the flow scale (106, 206, 306, 406) is configured to receive the agricultural product from the hopper (102, 202, 302, 402) via the first screw conveyor (104, 204, 304, 404).

4. The trailer (110, 210, 310, 410) of claim 1, wherein the flow scale (106, 206, 306, 406) is configured to prevent further agricultural product from being transferred to the train car (424) in response to the threshold agricultural product weight being reached.

5. The trailer (110, 210, 310, 410) of claim 1, wherein the laboratory (112, 212, 312) is configured to test the agricultural product for at least one of moisture content, foreign matter, oil content, and test weight.

6. The trailer (110, 210, 310, 410) of claim 1, wherein the laboratory (112, 212, 312) is configured to issue a weight ticket for the train car (424) after the train car load cycle is complete.

7. The trailer (110, 210, 310, 410) of claim 1, wherein the trailer (110, 210, 310, 410) further includes a generator (116, 216, 316) configured to power at least one of the first screw conveyor (104, 204, 304, 404), the second screw conveyor (108, 208, 308 408), the flow scale (106, 206, 306, 406), and the laboratory (112, 212, 312).

8. The trailer (110, 210, 310, 410) of claim 1, wherein the first screw conveyor (104, 204, 304, 404) and the second screw conveyor (108, 208, 308 408) are collapsible.

9. The trailer (110, 210, 310, 410) of claim 1, wherein the threshold product weight is configurable.

10. A method for loading a train car (424), comprising:
positioning a trailer (110, 210, 310, 410) next to a train car (424) to be loaded, wherein the trailer (110, 210, 310, 410) includes a crane (114, 214, 314), a hopper (102, 202, 302, 402), a flow scale (106, 206, 306, 406), and a laboratory (112, 212, 312);
removing, from the trailer (110, 210, 310, 410) via the crane (114, 214, 314), the hopper (102, 202, 302, 402);
performing a train car load cycle, including:
receiving, via the hopper (102, 202, 302, 402), agricultural product to be loaded into a train car (424);
transferring the agricultural product from the hopper (102, 202, 302, 402) to the flow scale (106, 206, 306, 406);
weighing, via the flow scale (106, 206, 306, 406), the agricultural product; and
transferring the agricultural product from the flow scale (106, 206, 306, 406) to the train car (424) until a threshold agricultural product weight is reached.

11. The method of claim 10, wherein the method further includes preventing further transfer of agricultural product from the hopper (102, 202, 302, 402) to the flow scale (106, 206, 306, 406) in response to the threshold agricultural product weight being reached.

12. The method of claim 10, wherein the method further includes testing, via the laboratory (112, 212, 312), the agricultural product.

13. The method of claim 10, wherein the method includes transferring the agricultural product from the hopper (102, 202, 302, 402) to the flow scale (106, 206, 306, 406) via a first screw conveyor (104, 204, 304, 404) attached to the hopper (102, 202, 302, 402).

14. The method of claim 10, wherein the method includes transferring the agricultural product from the flow scale (106, 206, 306, 406) to the train car (424) via a second screw conveyor (108, 208, 308 408) attached to the flow scale (106, 206, 306, 406).

15. The method of claim 10, wherein the method includes moving the hopper (102, 202, 302, 402) to the trailer (110, 210, 310, 410) via the crane (114, 214, 314) in response to the train car load cycle being finished.
